# EUROPEAN PATENT SPECIFICATION

(11) **EP 3 988 615 B1**
(45) Date of publication and mention of the grant of the patent: **03.05.2023**
(21) Application number: 21184902.1
(22) Date of filing: 09.07.2021
(51) Int. Cl.: C08L 23/08

(54) **POLYETHYLENE RESIN COMPOSITION AND BOTTLE CAP PRODUCED BY THE COMPOSITION**
POLYETHYLENHARZZUSAMMENSETZUNG UND DURCH DIE ZUSAMMENSETZUNG HERGESTELLTE FLALSCHENKAPPE
COMPOSITION DE RÉSINE DE POLYÉTHYLÈNE ET BOUCHON DE BOUTEILLE PRODUIT PAR LA COMPOSITION

(30) Priority: 20.10.2020 KR 20200136116
(43) Date of publication of application: 27.04.2022
(73) Proprietor: Hanwha TotalEnergies Petrochemical Co., Ltd., Seosan-si, Chungcheongnam-do 31900 (KR)
(72) Inventor: KIM, Choon Ki, 31900 Seosan-si, Chungcheongnam-do (KR); KIM, Dong Jin, 31900 Seosan-si, Chungcheongnam-do (KR); HAN, Jae Hyuck, 31900 Seosan-si, Chungcheongnam-do (KR)
(74) Representative: Patentwerk B.V.

(56) References cited:
- EP-A1- 3 216 829
- KR-A- 20140 060 871
- US-A1- 2005 267 249

## Description

### CROSS-REFERENCE TO RELATED APPLICATION

This application claims priority to and the benefit of Korean Patent Application No. 10-2020-0136116 filed on October 20, 2020 in the Korean Intellectual Property Office.

### BACKGROUND

### 1. Field

The present invention relates to a multimodal polyethylene resin composition having excellent flexural modulus and strain hardening modulus when produced as a molded product, and a molded product produced therefrom.

### 2. Description of the Related Art

Recently, with the diversification of packaging containers and the expansion of separate collection in the environmental aspect, the plasticization of bottle cap materials used for beverage containers such as glass bottles and polyethylene terephthalate (PET) is increasing. High-density polyethylene, polypropylene, etc. are mainly used as plastic bottle cap materials. Bottle caps made of these materials are lighter than conventional aluminum bottle caps, are increasingly used owing to advantages in that they are not corrosive, have excellent moldability, and can be molded in various designs. In particular, high-density polyethylene has more flexible properties than polypropylene, and thus has the advantage of maintaining the sealing properties of the contents without using a liner, unlike polypropylene bottle caps that require a separate liner to impart sealing properties of beverage container contents. As the use of

polyethylene for bottle caps is expanded as described above, a method of lowering the unit weight of bottle caps (thinning, weight reduction) is used as a method to lower the manufacturing cost of bottle caps. For thinning and weight reduction, the polyethylene material for bottle caps must have excellent flexural modulus and strain hardening modulus. However, since the existing polyethylene material for bottle caps has a low flexural modulus or strain hardening modulus, there are limitations in thinning and weight reduction for carbonated beverages.

### SUMMARY

An object of the present invention is to provide a polyethylene resin composition having excellent flexural modulus and strain hardening modulus, and a molded product produced therefrom in order to respond to the trend of thinning and weight reduction when produced as a molded product.

In order to achieve the object of the present invention, provided is a polyethylene resin composition comprising: 20 to 50 wt% of a copolymer (A) of ethylene and an α-olefin having 6 to 20 carbon atoms, having a melt flow index of 1.0 to 2.5 g/10 minutes (21.6 kg, 190 °C); and 50 to 80 wt% of an ethylene homopolymer (B), wherein the polyethylene resin composition has a melt flow index of 0.5 to 4.5 g/10 minutes (2.16 kg, 190 °C), a density of 0.965 g/cm3, a flexural modulus of 8,500 to 11,500 kgf/cm2, and a strain hardening modulus of 20 MPa or more.

In order to achieve another object of the present invention, provided is a molded product made of the polyethylene resin composition according to the present invention.

As described above, the polyethylene resin composition for bottle caps according to the present invention has excellent flexural modulus and strain hardening modulus when processing molded products for bottle caps, which is advantageous for thinning and weight reduction, and has excellent long-term storage stability.

### DETAILED DESCRIPTION

Hereinafter, the present invention will be described in more detail.

The present invention provides a polyethylene resin composition comprising: 20 to 50 wt% of a copolymer (A) of ethylene and an α-olefin having 6 to 20 carbon atoms, having a melt flow index of 1.0 to 2.5 g/10 minutes (21.6 kg, 190 °C); and 50 to 80 wt% of an ethylene homopolymer (B), wherein the polyethylene resin composition has a melt flow index of 0.5 to 4.5 g/10 minutes (2.16 kg, 190 °C), a density of 0.965 g/cm3, a flexural modulus of 8,500 to 11,500 kgf/cm2, and a strain hardening modulus of 20 MPa or more.

The copolymer (A) of ethylene and α-olefin having 6 to 20 carbon atoms has a melt flow index of 1.0 to 2.5 g/10 minutes when measured at 190°C with a load of 21.6 kg.

If the 21.6 kg melt flow index of the ethylene and C6-C20 α-olefin copolymer (A) is less than 1.0 g/10 minutes, the flowability of the polyethylene resin composition decreases, and the melt flow index (2.16 kg, 190°C) of the polyethylene resin composition is less than 0.5 g/10 minutes, making it difficult to mold the product. If the 21.6kg melt flow index of the ethylene and C6-C20 α-olefin copolymer (A) is greater than 2.5 g/10 minutes, the strain hardening modulus is less than 20MPa, there may be a problem with long-term storage stability of carbonated beverage bottles.

The polyethylene resin composition of the present invention comprises a copolymer (A) of ethylene and α-olefin having 6 to 20, preferably 6 to 8, carbon atoms. If the number of carbon atoms of the α-olefin of the copolymer (A) is less than 6 carbon atoms, the strain hardening modulus is less than 20 MPa, which may cause a problem in long-term storage stability of carbonated beverage bottles, and if the number of carbon atoms of the α-olefin is greater than 20, there may be a problem in that the production cost of the resin is greatly increased.

The proportion of the copolymer (A) of ethylene and α-olefin having 6 to 20 carbon atoms is 20 to 50% by weight. If the proportion is lower than the above range, the strain hardening modulus is less than 20 MPa, and thus there may be a problem in the long-term storage stability of carbonated beverage bottles, and if the proportion is greater than the above range, the flowability of the polyethylene resin composition is lowered and the melt flow index (2.16 kg, 190 °C) is less than 0.5 g/10 minutes, which may cause a problem in product molding.

The melt flow index (MI) of the polyethylene resin composition is preferably 0.5 to 4.5 g/10 minutes when measured at 190° C with a load of 2.16 kg. If the MI is less than 0.5 g/10 min, it is difficult to mold the polyethylene resin composition due to poor flowability, and if the MI is more than 4.5 g/10 min, the strain hardening modulus is less than 20 MPa, and thus there may be a problem in long-term storage stability of carbonated beverage bottles, etc.

According to the present invention, the melt flow rate ratio (MFRR) of the polyethylene resin composition is preferably 80 to 180. If the melt flow rate ratio is less than 80, the strain hardening modulus is less than 20 MPa, and there may be a problem with long-term storage stability of carbonated beverage bottles.

According to the present invention, the density of the polyethylene resin composition is preferably 0.950 to 0.965g / cm3. If the density is lower than the above range, the flexural modulus is less than 8,500kgf/cm2, and if the density is high, the flexural modulus is greater than 11 ,500kgf/cm2, the strain hardening modulus is less than 20MPa, and there may be a problem with long-term storage stability of carbonated beverage bottle caps.

In the present invention, based on a total of 100 parts by weight of the polyethylene resin composition, the polyethylene resin composition may include 0.01 to 0.5 parts by weight, preferably 0.05 to 0.2 parts by weight, of an antioxidant, and may further include 0.01 to 0.3 parts by weight, preferably 0.05 to 0.2 parts by weight, of a neutralizing agent, and 0.01 to 0.5 parts by weight, preferably 0.05 to 0.2 parts by weight, of a slip agent.

If the amount of the antioxidant is less than 0.01 parts by weight, there may be problems such as discoloration during storage and viscosity change during processing, and if the amount of the antioxidant is greater than 0.5 parts by weight, a change in physical properties such as taste or smell may occur. If the amount of the neutralizing agent is less than 0.01 parts by weight, discoloration and viscosity change may occur during processing, and if the amount of the neutralizing agent is greater than 0.3 parts by weight, changes in physical properties such as color and strength may occur during long-term storage.

If the amount of the slip agent is less than 0.01 parts by weight, it is difficult to open the bottle cap due to high opening torque, and if the amount of the slip agent is greater than 0.5 parts by weight, odor problems may occur due to the bottle cap.

Representative examples of the antioxidant may include one or more selected from the group consisting of 1,3,5-trimethyl-2,4,6-tris(3,5-di-tert-butyl-4-hydroxybenzyl)benzene 1,6-bis[3-(3,5-di-tert-butyl-4-hydroxyphenyl)propionamido]hexane, 1,6-bis[3-(3,5-di-tert-butyl-4-hydroxyphenyl)propionamido]propane, tetrakis[methylene(3,5-di-tert-butyl-4-hydroxyhydrocinnamate)]methane, bis(2,6-di-tert-butyl-4-methylphenyl) pentaerythritol-di-phosphite , and bis (2,4-di-tert-butylphenyl) pentaerythritol-di-phosphite.

Representative examples of the neutralizing agent may include calcium stearic acid, zinc stearic acid, magnesium aluminum hydroxy carbonate, zinc oxide, magnesium hydroxy stearic acid, or a mixture thereof.

Representative examples of the slip agent may include erucamide, oleamide, behenamide, stearamide, and the like. The polyethylene resin composition according to the present invention may be used in any general bottle cap manufacturing and molding methods, such as compression and injection molding.

Hereinafter, the present invention will be described in detail through examples. However, these examples are for illustrative purposes only, and the present invention is not limited thereto. Various physical properties in each of Example and Comparative Examples are measured in the following manners.

### Melt Flow index

The melt flow index was measured at 190 °C with a load of 2.16 kg and 21.6 kg. according to ASTM D1238.

### MFRR (Melt Flow Rate Ratio)

The MFRR was measured by determining the ratio expressed as MI 21.6 (21.6 kg load, melt flow index at 190 °C)/MI 2.16 (2.16 kg load, melt flow index at 190 °C).

### Density

The density was measured according to ASTM D1505.

### Strain Hardening Modulus

The strain hardening modulus was measured using a specimen having a thickness of 1.0 mm according to ISO 18488:2015.

### FM (Flexural Modulus)

The flexural modulus was measured according to ASTM D790.

### Example 1

Two-stage polymerization was carried out by continuous slurry polymerization using two polymerization tanks connected in series. The comonomer used was 1-hexene. In the first polymerization tank, ethylene and 1-hexene were supplied as a monomer and a comonomer, and in the second polymerization tank, only ethylene was supplied to perform polymerization. The melt flow index (1st-stage MI) of the ethylene and 1-hexene copolymer (A) with a 21.6 kg load at 190°C, obtained in the first polymerization tank, was 2.3 g/10 min, and the blend ratio (B/R) thereof was 40 wt%. The blend ratio (100-B/R) of the ethylene homopolymer (B) obtained in the second polymerization tank was 60 wt%. The melt flow index (MI) of the resin composition in which A and B are mixed was 1.0, the MFRR thereof was 101, and the density thereof was 0.955 g/cm³. The flexural modulus of the resin composition obtained in Example 1 was 9,200 kgf/cm², and the strain hardening modulus was 23.7 MPa, showing that the long-term storage stability of carbonated beverage bottles, etc., was excellent, which is advantageous in view of weight reduction and thinning. The results are shown in Table 1.

### Example 2

The melt flow index (1st-stage MI) of the ethylene and 1-hexene copolymer (A) with a 21.6 kg load at 190°C, obtained in the first polymerization tank in the same manner as in Example 1, was 1.3 g/10 min, and the blend ratio (B/R) thereof was 45 wt%. The blend ratio (100-B/R) of the ethylene homopolymer (B) obtained in the second polymerization tank was 55 wt%. The melt flow index (MI) of the resin composition in which A and B are mixed was 0.9, the MFRR thereof was 147, and the density thereof was 0.960 g/cm³.

The flexural modulus of the resin composition obtained in Example 2 was 10,600 kgf/cm², and the strain hardening modulus was 23.2 MPa, showing that the long-term storage stability of carbonated beverage bottles, etc., was excellent, which is advantageous in view of weight reduction and thinning.

### Comparative Example 1

Polymers (A) and (B) were prepared in the same manner as in Example 1, respectively. The melt flow index (1st-stage MI) of the ethylene and 1-hexene copolymer (A) with a 21.6 kg load at 190 °C, obtained in the first polymerization tank, was 3.1 g/10 min, and the blend ratio (B/R) thereof was 40 wt%. The blend ratio (100-B/R) of the ethylene homopolymer (B) obtained in the second polymerization tank was 60 wt%. The melt flow index (MI) of the resin composition in which A and B are mixed was 1.0, the MFRR thereof was 75, and the density thereof was 0.956 g/cm³. The flexural modulus of the resin composition obtained in Comparative Example 1 was 9,400 kgf/cm², and the strain hardening modulus was 17.8 MPa, which were worse than in Examples. The results are shown in Table 2.

### Comparative Example 2

Polymers (A) and (B) were prepared in the same manner as in Example 1, respectively. The melt flow index (1st-stage MI) of the ethylene and 1-hexene copolymer (A) with a 21.6 kg load at 190 °C, obtained in the first polymerization tank, was 2.3 g/10 min, and the blend ratio (B/R) thereof was 17 wt%. The blend ratio (100-B/R) of the ethylene homopolymer (B) obtained in the second polymerization tank was 83 wt%. The melt flow index (MI) of the resin composition in which A and B are mixed was 1.1, the MFRR thereof was 68, and the density thereof was 0.955 g/cm³. The flexural modulus of the resin composition obtained in Comparative Example 2 was 9,200 kgf/cm², and the strain hardening modulus was 15.1 MPa, which were worse than in Examples.

### Comparative Example 3

Polymers (A) and (B) were prepared in the same manner as in Example 1, respectively. The melt flow index (1st-stage MI) of the ethylene and 1-hexene copolymer (A) with a 21.6 kg load at 190 °C, obtained in the first polymerization tank, was 2.1 g/10 min, and the blend ratio (B/R) thereof was 43 wt%. The blend ratio (100-B/R) of the ethylene homopolymer (B) obtained in the second polymerization tank was 57 wt%. The melt flow index (MI) of the resin composition in which A and B are mixed was 5.4, the MFRR thereof was 171, and the density thereof was 0.956 g/cm³. The flexural modulus of the resin composition obtained in Comparative Example 3 was 9,400 kgf/cm², and the strain hardening modulus was 12.4 MPa, which were worse than in Examples.

### Comparative Example 4

Polymers (A) and (B) were prepared in the same manner as in Example 1, respectively. The melt flow index (1st-stage MI) of the ethylene and 1-hexene copolymer (A) with a 21.6 kg load at 190 °C, obtained in the first polymerization tank, was 2.2 g/10 min, and the blend ratio (B/R) thereof was 43 wt%. The blend ratio (100-B/R) of the ethylene homopolymer (B) obtained in the second polymerization tank was 57 wt%. The melt flow index (Ml) of the resin composition in which A and B are mixed was 0.9, the MFRR thereof was 120, and the density thereof was 0.968 g/cm³. The flexural modulus of the resin composition obtained in Comparative Example 4 was 12,000 kgf/cm², and the strain hardening modulus was 12.8 MPa, which were worse than in Examples.

### Comparative Example 5

Polymers (A) and (B) were prepared in the same manner as in Example 1, respectively, except that 1-butene as a comonomer was used in the first polymerization tank. The melt flow index (1st-stage MI) of the ethylene and 1-butene copolymer (A) with a 21.6 kg load at 190 °C, obtained in the first polymerization tank, was 2.2 g/10 min, and the blend ratio (B/R) thereof was 41 wt%. The blend ratio (100-B/R) of the ethylene homopolymer (B) obtained in the second polymerization tank was 59 wt%. The melt flow index (MI) of the resin composition in which A and B are mixed was 0.9, the MFRR thereof was 112, and the density thereof was 0.955 g/cm³. The flexural modulus of the resin composition obtained in Comparative Example 5 was 9,200 kgf/cm², and the strain hardening modulus was 17.0 MPa, which were worse than in Examples.

**[Table 1]**

| | Example 1 | Example 2 |
|---|---|---|
| 1st-stage MI (21.6 kg) | 2.3 | 1.3 |
| Comonomer | 1-hexene | 1-hexene |
| B/R (%) | 40 | 45 |
| MI (2.16 kg) | 1.0 | 0.9 |
| MFRR | 101 | 147 |
| Density (g/cm³) | 0.955 | 0.960 |
| FM (kgf/cm²) | 9,200 | 10,600 |
| Strain hardening modulus (MPa) | 23.7 | 23.2 |

**[Table 2]**

| | Comparative Example 1 | Comparative Example 2 | Comparative Example 3 | Comparative Example 4 | Comparative Example 5 |
|---|---|---|---|---|---|
| 1st-stage MI (21.6 kg) | 3.1 | 2.3 | 2.1 | 2.2 | 2.2 |
| Comonomer | 1-hexene | 1-hexene | 1-hexene | 1-hexene | 1-butene |
| B/R (%) | 40 | 17 | 43 | 43 | 41 |
| MI (2.16 kg) | 1.0 | 1.1 | 5.4 | 0.9 | 0.9 |
| MFRR | 75 | 68 | 171 | 120 | 112 |
| Density (g/cm³) | 0.956 | 0.955 | 0.956 | 0.968 | 0.955 |
| FM (kgf/cm²) | 9,400 | 9,200 | 9,400 | 12,000 | 9,200 |
| Strain hardening modulus (MPa) | 17.8 | 13.1 | 12.4 | 12.8 | 17.0 |

As can be seen from Table 2, in Comparative Example 1 using a copolymer prepared in the same manner as in Example 1 and having a melt flow index of greater than 2.5 g/10 min (21.6 kg, 190°C), the strain hardening modulus (MPa) was as low as 17.8. The strain hardening modulus (MPa) of Comparative Example 2 in which the amount of α-olefin copolymer (A) was less than 20 wt% was as low as 13.1. In Comparative Example 3 in which the melt flow index of the polyethylene resin composition was 5.4 g/10 min (2.16kg, 190 °C), which is greater than 4.5 g/10 min, the strain hardening modulus (MPa ) was as low as 12.4.

In addition, in Comparative Example 4 using the resin composition having a high density of 0.968 g/cm³, and a high flexural modulus of 12,000 kgf/cm², the strain hardening modulus (MPa) was as low as 12.8. In Comparative Example 5 using 1-butene having 4 carbon atoms, the strain hardening modulus (MPa) was as low as 17.0, which is considerably lower than 20 MPa of the resin composition according to the present invention.

## Claims

1. A multimodal polyethylene resin composition which is suitable for producing a molded product, wherein the composition comprises:
20 to 50 wt% of a copolymer (A) of ethylene and an α-olefin having 6 to 20 carbon atoms, having a melt flow index of 1.0 to 2.5 g/10 minutes (21.6 kg, 190 °C); and
50 to 80 wt% of an ethylene homopolymer (B),
wherein the polyethylene resin composition has a melt flow index of 0.5 to 4.5 g/10 minutes (2.16 kg, 190 °C), a density of 0.965 g/cm³, a flexural modulus of 8,500 to 11,500 kgf/cm² which is measured according to ASTM D790, and a strain hardening modulus of 20 MPa or more which is measured using a specimen having a thickness of 1.0 mm according to ISO 18488:2015.

2. The polyethylene resin composition of claim 1, wherein the melt flow rate ratio (MFRR) of the polyethylene resin composition is 80 to 180, which is measured by determining the ratio expressed as MI 21.6 (21.6 kg load, melt flow index at 190 °C) / MI 2.16 (2.16 kg load, melt flow index at 190 °C).

3. The polyethylene resin composition of claim 1 or 2, further comprising 0.01 to 0.5 parts by weight of an antioxidant and 0.01 to 0.3 parts by weight of a neutralizing agent, based on a total of 100 parts by weight of the polyethylene resin composition.

4. The polyethylene resin composition of claim 3, further comprising 0.01 to 0.5 parts by weight of a slip agent.

5. The polyethylene resin composition of claim 3 or 4, wherein the antioxidant is one or more selected from the group consisting of 1,3,5-trimethyl-2,4,6-tris(3,5-di-tert-butyl-4-hydroxybenzyl)benzene, 1,6-bis[3-(3,5-di-tert-butyl-4-hydroxyphenyl)propionamido]hexane, 1,6-bis[3-(3,5-di-tert-butyl-4-hydroxyphenyl)propionamido]propane, tetrakis[methylene(3,5-di-tert-butyl-4-hydroxyhydrocinnamate)]methane bis(2,6-di-tert-butyl-4-methylphenyl) pentaerythritol-di-phosphite , and bis (2,4-di-tert-butylphenyl) pentaerythritol-di-phosphite.

6. The polyethylene resin composition of any of claims 3-5, wherein the neutralizing agent is calcium stearic acid, zinc stearic acid, magnesium aluminum hydroxy carbonate, zinc oxide, magnesium hydroxy stearic acid, or a mixture thereof.

7. The polyethylene resin composition of claim 4, wherein the slip agent is erucamide, oleamide, behenamide, stearamide, or a mixture thereof.

8. A molded product made of the polyethylene resin composition set forth in any one of claims 1 to 7.

9. The molded product of claim 8, wherein the molded product is a bottle cap.

## Patentansprüche

1. Multimodale Polyethylenharzzusammensetzung, die für die Herstellung eines Formprodukts geeignet ist, wobei die Zusammensetzung umfasst:
20 bis 50 Gew.-% an einem Copolymer (A) von Ethylen und einem α-Olefin mit 6 bis 20 Kohlenstoffatomen, das einen Schmelzflussindex von 1,0 bis 2,5 g/10 Minuten (21,6 kg, 190 °C) aufweist; und
50 bis 80 Gew.-% an einem Ethylen-Homopolymer (B),
wobei die Polyethylenharzzusammensetzung einen Schmelzflussindex von 0,5 bis 4,5 g/10 Minuten (2,16 kg, 190 °C), eine Dichte von 0,965 g/cm³, einen Biegemodul von 8.500 bis 11.500 kgf/cm², gemessen gemäß ASTM D790, und einen Kaltverfestigungsmodul von 20 MPa oder mehr, gemessen unter Verwendung einer Probe mit einer Dicke von 1,0 mm gemäß ISO 18488:2015, aufweist.

2. Polyethylenharzzusammensetzung gemäß Anspruch 1, wobei das Schmelzflussratenverhältnis (MFRR) der Polyethylenharzzusammensetzung von 80 bis 180 beträgt, gemessen durch Bestimmung des als MI 21,6 (21,6 kg Last, Schmelzflussindex bei 190 °C)/MI 2,16 (2,16 kg Last, Schmelzflussindex bei 190 °C) ausgedrückten Verhältnisses.

3. Polyethylenharzzusammensetzung gemäß Anspruch 1 oder 2, ferner umfassend 0,01 bis 0,5 Gewichtsteile an einem Antioxidationsmittel und 0,01 bis 0,3 Gewichtsteile an einem Neutralisationsmittel, bezogen auf eine Gesamtmenge von 100 Gewichtsteilen der Polyethylenharzzusammensetzung.

4. Polyethylenharzzusammensetzung gemäß Anspruch 3, ferner umfassend 0,01 bis 0,5 Gewichtsteile an einem Gleitmittel.

5. Polyethylenharzzusammensetzung gemäß Anspruch 3 oder 4, wobei das Antioxidationsmittel eines oder mehrere ausgewählt aus der Gruppe bestehend aus 1,3,5-Trimethyl-2,4,6-tris(3,5-di-tert-butyl-4-hydroxybenzyl)benzol, 1,6-Bis[3-(3,5-di-tert-butyl-4-hydroxyphenyl)propionamido]hexan, 1,6-Bis[3-(3,5-di-tert-butyl-4-hydroxyphenyl)propionamido]propan, Tetrakis[methylen(3,5-di-tert-butyl-4-hydroxyhydrocinnamat)]methan, Bis(2,6-di-tert-butyl-4-methylphenyl)pentaerythritoldiphosphit und Bis(2,4-di-tert-butylphenyl)pentaerythritoldiphosphit ist.

6. Polyethylenharzzusammensetzung gemäß einem der Ansprüche 3-5, wobei das Neutralisationsmittel Calciumstearat, Zinkstearat, Magnesiumaluminiumhydroxycarbonat, Zinkoxid, Magnesiumhydroxystearat oder ein Gemisch davon ist.

7. Polyethylenharzzusammensetzung gemäß Anspruch 4, wobei das Gleitmittel Erucamid, Oleamid, Behenamid, Stearamid oder ein Gemisch davon ist.

8. Formprodukt, hergestellt aus der Polyethylenharzzusammensetzung gemäß einem der Ansprüche 1 bis 7.

9. Formprodukt gemäß Anspruch 8, wobei das Formprodukt ein Flaschenverschluss ist.

## Revendications

1. Composition de résine de polyéthylène multimodal qui est appropriée pour produire un produit moulé, la composition comprenant :
20 à 50 % en poids d'un copolymère (A) d'éthylène et d'une α-oléfine possédant 6 à 20 atomes de carbone, possédant un indice de fluidité à chaud de 1,0 à 2,5 g/10 minutes (21,6 kg, 190 °C) ; et
50 à 80 % en poids d'un homopolymère d'éthylène (B),
la composition de résine de polyéthylène possédant un indice de fluidité à chaud de 0,5 à 4,5 g/10 minutes (2,16 kg, 190 °C), une densité de 0,965 g/cm³, un module de flexion de 8 500 à 11 500 kgf/cm² qui est mesuré selon la norme ASTM D790, et un module d'écrouissage de 20 MPa ou plus qui est mesuré en utilisant une éprouvette possédant une épaisseur de 1,0 mm selon la norme ISO 18488:2015.

2. Composition de résine de polyéthylène selon la revendication 1, le rapport des débits à chaud (MFRR) de la composition de résine de polyéthylène étant de 80 à 180, qui est mesuré en déterminant le rapport exprimé comme MI 21,6 (charge de 21,6 kg, indice de fluidité à chaud à 190 °C)/MI 2,16 (charge de 2,16 kg, indice de fluidité à chaud à 190 °C).

3. Composition de résine de polyéthylène selon la revendication 1 ou 2, comprenant en outre 0,01 à 0,5 partie en poids d'un antioxydant et 0,01 à 0,3 partie en poids d'un agent neutralisant, sur la base d'un total de 100 parties en poids de la composition de résine de polyéthylène.

4. Composition de résine de polyéthylène selon la revendication 3, comprenant en outre 0,01 à 0,5 partie en poids d'un agent de glissement.

5. Composition de résine de polyéthylène selon la revendication 3 ou 4, l'antioxydant étant l'un ou plusieurs choisis dans le groupe constitué par 1,3,5-triméthyl-2,4,6-tris(3,5-di-tert-butyl-4-hydroxybenzyl)benzène, 1,6-bis[3-(3,5-di-tert-butyl-4-hydroxyphényl)propionamido]hexane, 1,6-bis[3-(3,5-di-tert-butyl-4-hydroxyphényl)propionamido]propane, tétrakis[méthylène(3,5-di-tert-butyl-4-hydroxyhydrocinnamate)]méthane bis(2,6-di-tert-butyl-4-méthylphényl)pentaérythritol-di-phosphite, et bis(2,4-di-tert-butylphényl)pentaérythritol-di-phosphite.

6. Composition de résine de polyéthylène selon l'une quelconque des revendications 3 à 5, l'agent neutralisant étant l'acide stéarique calcium, l'acide stéarique zinc, l'hydroxy carbonate de magnésium d'aluminium, l'oxyde de zinc, l'acide hydroxystéarique magnésium ou un mélange correspondant.

7. Composition de résine de polyéthylène selon la revendication 4, l'agent glissant étant l'érucamide, l'oléamide, le béhénamide, le stéaramide ou un mélange correspondant.

8. Produit moulé composé de la composition de résine de polyéthylène indiquée dans l'une quelconque des revendications 1 à 7.

9. Produit moulé selon la revendication 8, le produit moulé étant un capuchon de bouteille.
